Europäisches Patentamt

European Patent Office

Office européen des brevets

(11) Publication number: 0 160 414
A2

## (12) EUROPEAN PATENT APPLICATION

(21) Application number: 85302343.0

(22) Date of filing: 03.04.85

(51) Int. Cl.⁴: A 61 H 33/04
A 61 J 1/00, B 29 C 49/00
B 29 C 49/76
//B65D1/00, B65D51/22

(30) Priority: 19.04.84 GB 8410260
07.08.84 GB 8420081
01.09.84 GB 8422166
26.10.84 GB 8427174

(43) Date of publication of application:
06.11.85 Bulletin 85/45

(84) Designated Contracting States:
AT BE CH DE FR IT LI LU NL SE

(71) Applicant: Dispomed Limited
6 Druids Park
Calderstones Liverpool, L18 3LJ(GB)

(72) Inventor: Prebble, Ernest Porter
6 Druids Park Calderstones
Liverpool, L18 3LS(GB)

(72) Inventor: Prebble, John Harry
30 Dudlow Lane
Liverpool 18(GB)

(74) Representative: Lyons, Andrew John et al,
ROYSTONS 531 Tower Building Water Street
Liverpool L3 1BA(GB)

(54) Containers and methods and apparatus for making same.

(57) A combined sealed container/eye bath device (20) specifically comprises a sealed main container (22) for eye-lotion and/or cleaning liquid (24) and an eye-bath (26) conjoined at (28). The whole device (20) will be made and supplied as a sterile pack intended for disposable use, i.e. the contents (24) of the main container being adequate for a single application of fluid, normally to one eye but possibly to both eyes of the user. A thinned or otherwise weakened fracture formation (30) enables the eye-bath (26) to be twisted or otherwise broken off the main container (22) to leave the latter upon at its top and the former readily handled by way of the part (28) then constituting a stem.

Production of such a container is by adaptation of blow-moulding techniques.

FIG.2

FIG.4

Croydon Printing Company Ltd.

EP 0 160 414 A2

Title: Containers and methods and apparatus
for making same

## DESCRIPTION

This invention concerns containers for liquids, especially sterile solutions, such as eye lotions, contact lens cleaning solutions, and medicines and methods and apparatus for making such containers.

It has long been insisted that eye drops be made sterile and kept reasonably free of microorganisms after opening by incorporating a preservative in the eye drop solution. Unfortunately continued use of eye drops containing preservative can have a detrimental effect on the eyes.

It was, therefore, proposed that sterile eye drops be provided in smaller containers for single applications after which the container is disposed of, thus avoiding the necessity for preservative.

Sterile requirements are also made of eye lotions applied to the eye by means of an eye bath and also of solutions for cleaning contact lens particularly plastics contact lens. Again the build up of preservative can be detrimental to the eye.

To avoid the need for a preservative, the eye lotion or lens cleaning solution can be put into disposable sterile containers and the lotion used only once.

One object of this invention is to provide such a container associated with an application or dosage container, such as an eye bath, suitable for a single treatment/application and then disposal.

Another object of this invention is to provide methods and apparatus for producing such containers.

According to a first aspect of this invention there is provided a container for a liquid such as a sterile solution or medicine associated with an application or dosage container, such as an eye bath suitable for use in treating the eye or for applying the solution to an item to be cleaned, such as a contact lens, or for intake of a dose of medicine.

The application/dosage container hereinafter referred to as a bath and the main container may be so associated that the sterile solution can be transferred to the bath from the container without disassociation of the container and bath. Alternatively such transfer may be effected only after such disassociation.

In a first preferred embodiment the bath is connected to the container so that the connection forms a seal for the container. For example, the container and bath could be crimped together after filling of the container. Twisting off the bath would then open the container for filling of the bath.

In a second preferred embodiment the container and bath are integral. The container may be an extension of the bath and with a removable barrier therebetween. Such a barrier could be peelable foil or the like covering the mouth of the container part. Removal of the barrier then converts the whole into a bath.

In a third preferred embodiment, the container and bath may be connected so that a part of or associated with the bath can pierce a part of the container when the container and bath are urged further together, say by mutual screw threading. The piercing of the container will allow its contents to flow or be forced, say by squeezing of the container, into the bath.

Preferably each embodiment of the invention will be made principally of plastics material, the thicknesses and type of the plastics material being chosen according to the desired strength/flexibility of each part. For example, the container will usually be relatively thin walled to assist emptying of the contents of the container by squeezing, whereas for

- 4 -

0160414

parts for piercing may be of greater thickness or even of more rigid material.

The present invention thus can provide a combined container and bath which can only be used once and then disposed of. This means that no preservative is needed in the solutions in the container provided filling of the container has been performed under sterile conditions.

The containers of the invention may be manufactured in any suitable way. Preferably manufacture is by moulding, possibly injection or blow moulding depending on the embodiment being produced.

For embodiments wherein a main container is conjoined with an open-topped applicator container, for example serving as an eye bath, wherein removal of the open-topped applicator container serves to open the main container for filling of the applicator container, clearly, the main container should be sealed immediately after loading with liquid. The applicator container is conveniently conjoined with the main container at a breakable seal position (advantageously the same position as sealing after loading the main container), and separation of the applicator container from the main container can conveniently be associated with opening the latter for transferring liquid to the former.

According to a second aspect of the invention there is provided a method for producing a container and eye bath connected so that the connection forms a seal for the container, comprising the steps of forming the container and eye bath integrally in a mould from a tubular parison and filling the container prior to sealing thereof.

According to a third aspect of the invention there is provided apparatus for producing a container and eye bath connected so that the connection forms a seal for the container comprising a mould for forming a tubular parison into the container and eye bath and means for filling the container prior to sealing thereof.

Preferably a blow-moulding technique is used to form the parison of hot tubular plastics material into the container and eye bath. For this separable main mould parts will enclose the parison and a blowing mandrel will form the parison to shape, usually with suction applied to the mould interior, after which the same mandrel may load the thus-formed main container with liquid before top or head mould parts seal off the main container. A retractable mandrel with separate, usually concentric, passages for air and liquid is suitable.

It will be appreciated that top or head sealing will impart a fracture formation whereby a top portion can be twisted off to open the main container, and that such removable top portion can be associated with a separately made eye-bath of the same or compatible material so that connection can be made to the top portion by any suitable means, for example spin-welding.

It is, however, practical to form or complete formation of the applicator container, specifically eye-bath, as a top portion of the main container, i.e. from the same parison, and usually as a dished or cup shape that may be handled via what is twisted off the main container. A smooth rim is readily imparted by drawing a hot wire across the top of the parison whether after or before blow-moulding, even after leaving the mould. Moreover, a shallow U-shaped trough in the top of the mould parts allows a correspondingly shaped hot wire to impart a satisfactorily double-curving rim to an eye-bath.

Such curving of the rim can otherwise be formed using the aforementioned mandrel where same has sharpened edges so to cut the top of the parison when the mandrel is moved into operative position relative to the mould. Such a mandrel can further serve to take away surplus parison material when retracted, i.e. moved away.

Alternatively, such curving lip formation may depend upon movement of the top or head mould parts displacing parison material against correspondingly formed edges of the then operatively positioned mandrel.

In both these latter cases, it may well be preferable later to apply a hot wire trim to assure or improve the desired smoothness of rim after retraction of the mandrel. Moreover, it is particularly preferred that these mandrel edge formations be made relative to another proposal hereof, namely that of having a mandrel tip formation exteriorly matching the desired interior shape of the applicator container.

Alternatively, the container/applicator container may be formed upside down in a mould. Usually for smoother removal of a moulded container from the mould sets of pins are provided that can contact and grip the melted plastics material through the base of the mould. As the mould parts separate these pins are retracted taking the moulded container with them to guide it onto say a conveyor for removal from the moulding area.

It is herein envisaged that, instead of sets of pins, a guide in the form of an internal mould for the applicator container be used. Thus, a parison of hot plastics tube enters the mould and is pinched near the bottom before filling. The excess of material at the bottom is moulded into an applicator container by insertion of the guide which as well as moulding also, grips or retains the applicator part for removal of the whole after top sealing. The pinching of the parison near its bottom provides the break point for later tearing off of the applicator to open the main container to use the liquid contained therein.

Applicator container moulding has the advantage of offering greater assurance against distortion of the intended applicator container shape than is offered simply by application of vacuum during closing of the mould parts to form the seal.

This invention will now be further described, by way of example only, with reference to the accompanying drawings in which:

Figure 1 shows schematically a first embodiment of the invention;

Figure 2 shows schematically a second embodiment of the invention;

Figure 3 shows schematically a third embodiment of the invention;

Figure 4 is a section through blow-moulding apparatus;

Figure 5 shows another edge of the top of the mould;

Figures 6 and 7 schematically illustrate finishing techniques for producing a container according to the invention formed in the apparatus of Figures 4 and 5; and

Figure 8 shows schematically another proposal of the invention.

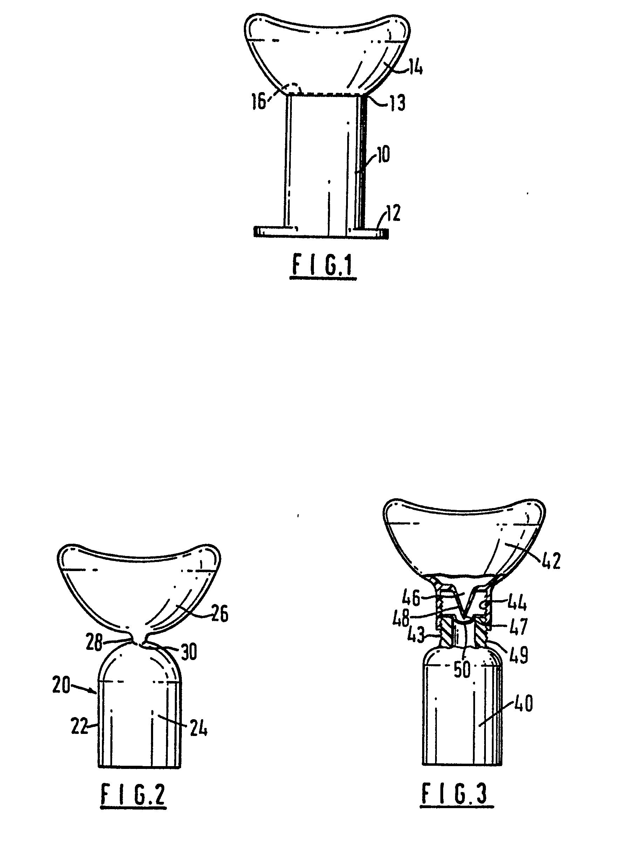

Referring to Figure 1, a container 10 of plastics material of cylindrical form containing sterile solution has a flange 12 forming a base for the container. The container 10 at its upper end 13 is surmounted by a bath 14 which is integrally formed with the container. At the notional junction of the container 10 and bath 14 is a peelable foil 16 that is readily removed so that the whole container can be used as an eye bath.

Turning to Figure 2, a combined sealed container/ open topped applicator container device 20 specifically comprises a sealed main container 22 for eye-lotion and/or irrigation liquid 24 and an eye-bath 26 conjoined at 28. The whole device 20 will be made and supplied as a sterile pack intended for disposable use, i.e. the contents 24 of the main container being adequate for a single application of fluid, normally to one eye but possibly to both eyes of the user. A thinned or otherwise weakened fracture formation 30 enables the eye bath 26 to be twisted or otherwise broken off the main container 22 to leave the latter open at its top and the former readily handled by way of the part 28 then constituting a stem, even a stem with a foot by which it can be stood on a flat surface, especially where the fracture formation is, as is perfectly feasible, actually at a lower position on the main container, typically at edges of a domed top formation.

In Figure 3, a container 40 and bath 42 both of plastics material are connected by mutual screw threading 43 and 44 respectively. The bath 42 has through its base a funnel 46 having a pointed end 47 and openings 48 in its sides to allow passage of fluid through to the bath.

The container 40 has a neck 49 sealed by a piercable membrane 50. To break the seal 50 the container and bath are screwed together so that point 47 pierces the membrane 50. The sterile solution in the container can be transferred to the bath by squeezing the container and the solution then applied to the eye from the bath.

To prevent accidental squirting of the solution into the eye while filling the eye bath the funnel 46 may have one or more baffles (not shown) over its upper opening.

Although three embodiments of the invention have been described in detail, it will be appreciated that other container/bath combinations may be produced embodying the principles of the invention.

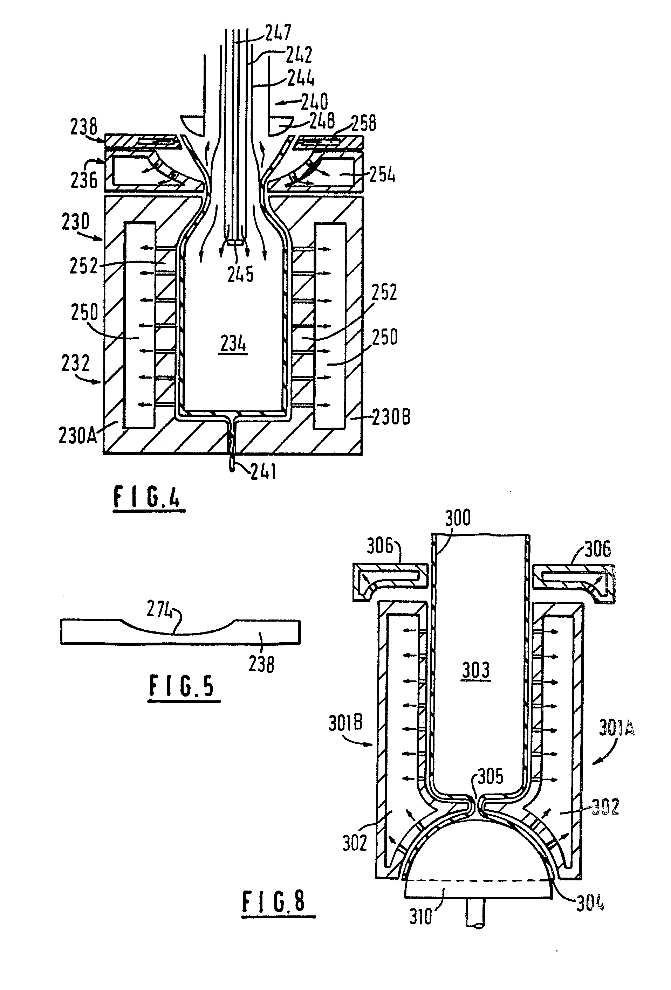

A preferred method of manufacture for the device 20 is by adaptation of known blow-moulding techniques for the main container 22. Thus, in Figure 4, we show a blow-moulding apparatus 230 comprising a first or main mould section 232 having an interior cavity 234 corresponding to the body of the main container 22 and a second mould section 236 for sealing the main container 22 and forming the outer shape of the eye bath 26 and a parison holding section 238 that lightly holds the parison by means of suction and helps form the upper edge of the eye bath. The second mould section 236 could itself be in two parts i.e. one for sealing the main container and the other for forming the eye bath. Fabrication details for the sections 232, 236 and 238 are not shown, but all are incorporated as separate halves in mould parts 230A, 230B to the left and right, respectively, in Figure 4 of a central break line. Those mould parts 230A and 230B are movable away and towards each other in the plane of the drawing. Usually, those mould parts 230A and 230B are further movable together in a direction through the plane of the drawing between a loading station and a moulding/filling station.

Figure 4 indicates a conventional mandrel system 240 of the moulding/filling station. The loading station (not shown) conveniently includes a plastics extrusion stage operable for producing hot plastics tube, usually downwardly, to a length somewhat longer than the height of the mould parts 230A, 230B. The latter will arrive separated at the loading stage and there be closed together to seal off one end of the hot plastics tube, see sprue formation 241 at the bottom of the main mould section, and, at most, lightly grip and locate the hot plastics tube above the main mould cavity 234 in section 238. After cutting the hot tube from the extruder outlet, conveniently close thereto, to form the parison from which the device hereof is formed; the closed-together mould part 230A, 230B are moved to the moulding/filling station.

The mandrel system 240 of Figure 4 is shown with two concentric tubes 242, 244 projecting from a third concentric tube 246 ending at a mandrel head formation 248. The mandrel head is movable into and out of the top mould section 236 and the tubes 242, 244 well into the main mould cavity 234. The preferred uses of the tubes 242, 244 and 246 are for pressurised gas, usually hot air, supply, liquid filling, and air exhaust at least at liquid filling, respectively. Suitable valves, such as 245 on rod 247 in tube 242 and at the upper end of the mandrel (not shown), metering and cycle timing equipment will be associated with the mandrel system of Figure 4, further interlocked at least with vacuum or suction for chamber 250 about suitably apertured side walls 252 of the main mould cavity 234 and chamber 254 of the second mould section 236, and chamber 258 about the parison holding section 238. Arrows indicate communication between the mould interiors and the aforesaid chambers 250, 254 and 258.

The tube 244 is flared so as to contact the interior of the parison to effect a seal to the interior of the parison while the main container is blown to shape against the interior of the main cavity 234 by air via tube 242 with valve 245 open. Then, the valve 245 is closed, a valve (not shown) opened to admit eye-bath liquid via tube 244 which has been lowered to leave an exhaust gap between it and the parison. Afterwards, the mandrel tubes 242, 244 will be retracted the mandrel head 248 lowered and the second mould section parts 236 will be closed together to seal the main container 22, thus forming the stem 28 to the eye-bath 26 and creating a twist-off fracture formation in the seal to the main container and to form the main part of the eye-bath between mould parts and the mandrel.

The possibility of assisting eye-bath formation is illustrated in Figure 4, at least by the use of vacuum via the chambers 254 and 258. However, it will be appreciated that the formation of the open-topped eye-bath is really more akin to standard male-female compression moulding than to blow-moulding and it is envisaged that some may be relied upon entirely, i.e. with the mandrel head simply entering the eye-bath well and squeezing the parison material unassisted by any differential pressures. However, such assistance may serve to prevent distortion if the mandrel head is removed from the eye-bath well before the mould parts 254 are operated.

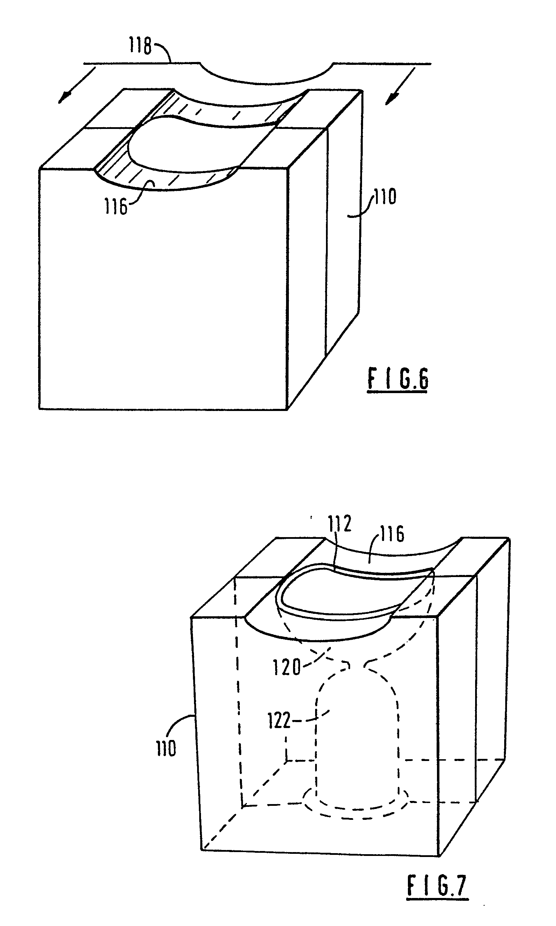

Where such moulding of the eye bath is certain to produce an all-round excess of parison material squeezed clear of the top of the mould section 238, same may be trimmed to a satisfactorily smooth rim surface by a hot wire wiped across the top of the mould, preferably shaped to conform with a shallow U-shaped depression therein, see 274 in Figure 5 and Figures 6 and 7. Figures 6 and 7 are intended to show how a suitably smooth edge may be produced for the eye bath. In Figures 6 and 7 the mould 110 has a shallow U-shaped trough 116 across it that intersects the position of the parison 112. A hot metal wire 118 of corresponding shape to that of the top of the mould is passed over the mould to cut off excess parison and leave a smooth edge for eye bath 120 on container 122.

Moulding efficiency may be improved if the mandrel head has an upward peripheral flanged extension, which may receive without damaging a previously, hot wire-cut rim of the parison, or itself form a satisfactorily smooth rim or leave a contained protrusion to be hot-wire trimmed, or itself cut such edge is appropriately

- 16 -

sharpened.   Trimming of the parison prior to moulding can be done between the loading and moulding stations, or at either.   Any trimming of the eye bath rim after moulding can be at the moulding station or afterwards, say in a holder or holding stage on a conveyor system.

Finally, in Figure 8, which is schematic, a main container/applicator container combination is formed from a parison 300 of hot molten plastics that is delivered to a two part blowing/suction mould systems 301A and 301B.   Main mould sections 302 are shaped to form a main container part 303 and an applicator container part 304 whilst pinching the parison at 305 to seal the main container part for blow moulding and subsequent filling via the open upper end of the parison 300.

Top mould sections 306 are shown for sealing and forming the base of the container after filling.   At the other end of the parison a guide 310 is inserted between the main mould sections 302 to form the internal shape of the applicator container part by compression moulding.   Alternatively, the applicator container may be formed also by blow moulding, compressed air being blown onto that part of the parison to form same against the mould halves 301A and B with suction applied to the interior surface of the mould. When moulding and filling is completed, the mould sections separate and the guide 310 aids withdrawal of the formed container.

Finishing of the edge of the applicator container may also be achieved by means of the hitherto mentioned hot-wire method. Alternatively the edges of the applicator container may be cut and rolled between the mould and a suitably shaped former acting against the mould.

Thus by the method and apparatus of the invention integral container/eye baths for single application may be produced that satisfy the need for eye treatments in that they may be provided sterile without the need for preservative.

## CLAIMS

1. A container for a liquid such as a sterile solution or medicine associated with a bath suitable for use in treating the eye or for applying the solution to an item to be cleaned or for intake of a dose of medicine.

2. A container as claimed in claim 1, wherein the bath and container are so associated that the sterile solution can be transferred to the bath from the container without disassociation of the container and bath.

3. A container as claimed in claim 1, wherein the sterile solution can be transferred to the bath from the container only after disassociation thereof.

4. A container as claimed in claim 1 or 2, wherein the container and bath are integral.

5. A container as claimed in claim 4, wherein the container is an extension of the eye bath, with a removable barrier therebetween.

6. A container as claimed in claim 1 or 2, wherein the container and bath are connected so that a part of or associated with the bath can pierce a part of the container when the container and bath are urged further together.

7. A container as claimed in claim 1 or 3, wherein the bath is connected to the container so that the connection forms a seal for the container.

8. A method for producing a container and eye bath connected so that the connection forms a seal for the container, comprising the steps of forming the container and eye bath integrally in a mould from a tubular parison with filling of the container prior to sealing thereof.

9. A method as claimed in claim 8, wherein separable main mould parts enclose the parison and a blowing mandrel forms the parison to shape, after which the same mandrel loads the thus-formed main container with liquid before other mould parts seal off the main container.

10. Apparatus for producing a container and bath connected so that the connection forms a seal for the container comprising a mould for forming a tubular parison into the container and bath and means for filling the container prior to sealing thereof.

F I G.1

F I G.2

F I G.3

2/3

0160414

FIG.4

FIG.5

FIG.8

118

116

110

**F I G.6**

112    116

120

122

110

**F I G.7**